# FASCICULE DE BREVET EUROPEEN

(11) **EP 3 393 840 B1**
(45) Date de publication et mention de la délivrance du brevet: **06.11.2019**
(21) Numéro de dépôt: 16815895.4
(22) Date de dépôt: 07.12.2016
(51) Int. Cl.: B60K 35/00, B60K 37/06, G06F 3/0488

(54) **SURFACE TACTILE SUR VOLANT DE VEHICULE**
FAHRZEUGLENKRAD MIT BERÜHRUNGSEMPFINDLICHER OBERFLÄCHE
TOUCH-SENSITIVE SURFACE VEHICLE STEERING WHEEL

(30) Priorité: 21.12.2015 FR 1562923
(43) Date de publication de la demande: 31.10.2018
(73) Titulaire: PSA AUTOMOBILES S.A., 78300 Poissy (FR)
(72) Inventeur: PANAHI, Patrick, 81500 Lavaur (FR); BERTRAND, Emmanuel, 78100 St Germain en Laye (FR); FIGEAC GALINDO, Silvio, 78180 Montigny le Bretonneux (FR); DELCOURT, Charlotte, 75009 Paris (FR)
(74) Mandataire: Jeannin, Laurent Jean-Pierre
(86) Numéro de dépôt international: PCT/FR2016/053254
(87) Numéro de publication internationale: WO 2017/109322

(56) Documents cités:
- EP-A2- 2 003 537
- US-A1- 2012 262 403
- US-A1- 2013 024 071
- US-A1- 2014 019 912

## Description

La présente invention concerne de manière générale une surface tactile sur un volant de véhicule automobile, et en particulier, une surface tactile sur un volant de véhicule automobile qui est capable de reconnaître une pluralité de gestes.

De manière générale, les véhicules automobiles embarquent de plus en plus souvent des surfaces tactiles qui remplacent les boutons à connectique électrique, par exemple. Ce type de surface peut être utilisé pour les ordinateurs de bord, GPS, commande de téléphone, centre multimédia ou du même genre. La plupart du temps, ces surfaces ont pris la place des lecteurs audio au centre de la console de bord. Cependant, un problème de ce type de surface et que pour les utiliser, ils requièrent que le conducteur détourne le regard de la route ce qui génère une situation de danger. Il a donc été nécessaire de déplacer les commandes tactiles sur des éléments d'habitacle proches des mains des utilisateurs pour que ceux-ci ne se détournent pas des conditions de circulation lors d'une interaction avec ce type de commande.

Il est connu dans l'art antérieur de proposer un volant avec une surface tactile intégrée. Un problème qui survient avec ce type de dispositif est que d'une part les gestes peuvent être imprécis car l'utilisateur est généralement en train de conduire et le geste entré peut être mal reconnu. D'autre part, un autre problème est celui lié à l'angle du volant, car un volant à 0° et un volant à 20° dans un virage, par exemple, reconnaitra différemment un même geste.

Par exemple, le document US 8 886 407 décrit un volant avec une surface tactile capable de détecter une pluralité de gestes en fonction de l'angle de rotation du volant. La surface tactile décrit dans ce document permet de reconnaître une orientation de geste indépendamment de la rotation du volant qui peut fausser la détection. Ce document est cependant silencieux en ce qui concerne les différents types de geste et leur reconnaissance de même que les moyens de reconnaissance de geste.

On connait par le document US20130024071 un dispositif d'entrée de roue directrice est monté sur une roue directrice d'un véhicule et comporte un dispositif de détection de pointeur détectant un événement de pointage sur une surface de détection de pointeur, tout mouvement ou rupture de l'événement de pointeur, et la vitesse, la vélocité et l'accélération de l'événement de pointeur, et délivre en sortie un signal de détection de pointeur correspondant.

On connait par le document EP2003537 un écran de visualisation incluant une première rangée de capteurs pour détecter un premier stimulus externe qui vérifie un premier critère de détection, et une deuxième rangée de capteurs pour détecter un deuxième stimulus externe qui vérifie un second critère de détection, le second critère de détection étant quantitativement différent du premier critère de détection.

On connait par le document US2012262403 un dispositif de commande pour véhicule automobile, comprenant une surface tactile de commande configurée pour détecter un geste d'un utilisateur exercé sur ladite surface tactile, et une unité d'interprétation dudit geste détecté pour générer une commande associée audit geste détecté. Selon l'invention, ledit dispositif de commande comporte au moins une unité de traitement configurée pour alterner le mode de fonctionnement dudit dispositif de commande entre un mode de fonctionnement appliqué, et un mode de fonctionnement rudimentaire, en fonction d'un paramètre d'entrée pour alterner le mode de fonctionnement. »

On connait par le document US2014019912 un système permettant de mettre en œuvre une fonction de contrôle d'entrée d'informations auxiliaires d'une opération de glissement dans un terminal portable, le système comprenant un module de commande d'affichage de fonction de communication, un module de base de données d'entrées de glissement, un module de traitement de glissement et un module de personnalisation des opérations de glissement.

Un but de la présente invention est de répondre aux inconvénients du document de l'art antérieur mentionné ci-dessus et en particulier, tout d'abord, de proposer une surface tactile capable de reconnaître différents gestes.

Pour cela un premier aspect de l'invention concerne une surface tactile montée sur un volant de véhicule, comprenant un capteur de pression, le capteur de pression étant agencé pour détecter une pression d'un organe d'un utilisateur en appui sur la surface tactile, caractérisée en ce qu'en fonction de la pression détectée, la surface tactile est agencée pour fonctionner selon un premier mode dans lequel elle est agencée pour lancer une première commande suite à un appui ponctuel, ou un second mode dans lequel elle est agencée pour lancer une seconde commande suite à un glissement. De cette manière, on peut facilement distinguer entre des gestes d'appui et de glissement.

Une réalisation particulièrement intéressante consiste en ce que les première et seconde commandes sont agencées pour désactiver au moins une portion de surface de la surface tactile de sorte à délimiter au moins deux portions de surface actives de la surface tactile. Ainsi, on facilite la distinction des commandes.

De manière avantageuse, les première et seconde commandes sont agencées pour désactiver une zone en forme de X séparant quatre surfaces actives sur la surface tactile. De cette manière, on dispose d'un large choix de commande.

Avantageusement, la première commande est agencée pour désactiver une zone en forme de X centrée sur la surface tactile. Ainsi, un peut facilement définir les commandes choisies.

Selon l'invention la seconde commande est agencée pour désactiver une zone en forme de X centrée sur les coordonnées du point d'appui initial. De cette manière, on crée des zones de saisie de commande par glissement séparées.

De manière avantageuse, l'une ou l'autre des première et seconde commandes n'est lancée que si le capteur de pression détecte une pression pendant un temps prédéterminé ou supérieur. Ainsi, on dispose d'un système de sécurité qui empêche la surface de se déclencher de manière intempestive.

Avantageusement, le temps prédéterminé est de 30 millisecondes. De cette manière, on dispose d'un bon compromis entre sécurité et intuitivité.

Une réalisation particulièrement intéressante consiste en ce que le second mode est mis en œuvre si le glissement détecté est supérieur à 15 millimètres. Ainsi, on dispose d'un système de sécurité supplémentaire qui empêche la surface de se déclencher de manière intempestive.

Un second aspect de l'invention est un volant de véhicule comprenant la surface tactile selon le premier aspect de l'invention.

Un troisième aspect de l'invention est un véhicule automobile comprenant le volant de véhicule selon le second aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un mode de réalisation préféré d'une surface tactile fonctionnant selon un premier mode de fonctionnement ;
- la figure 2 représente le mode de réalisation préféré d'une surface tactile fonctionnant selon un second mode de fonctionnement

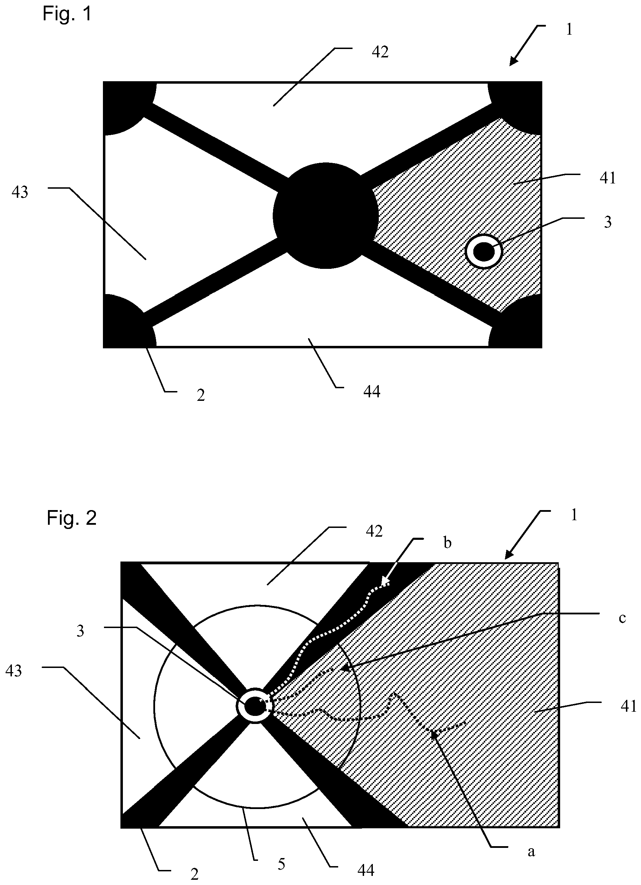

La figure 1 représente une surface tactile 1 montée sur un volant de véhicule (non représenté) selon un mode de réalisation préféré de la présente invention. Une telle surface tactile 1 comprend un capteur de pression (non représenté) et ce capteur de pression est agencé pour détecter une pression d'un organe d'un utilisateur, tel qu'un doigt dans le cas d'une surface capacitif bien que la présente invention n'y soit pas limitée, en appui sur cette surface tactile. Cet appui est représenté sur les figures 1 et 2 par le signe de référence 3. Bien que cela ne soit pas représenté sur la figure 1, la surface tactile comprend également une connectique et une unité de commande qui permet, en fonction de la pression mesurée par le capteur de pression de fonctionner selon un premier mode ou un second mode qui sont représentés sur les figures 1 et 2, respectivement.

En effet, en fonction de la pression détectée, la surface tactile est agencée pour fonctionner selon un premier mode, représenté sur la figure 1, dans lequel l'unité de commande est agencée pour lancer une première commande suite à un appui ponctuel 3. Il est en effet considéré que lors d'un appui ponctuel 3, la pression est supérieure à celle d'un glissement. Le seuil de pression peut être choisi de façon arbitraire ou prédéterminée. Il est à noter qu'en plus de la pression, le choix d'un mode de fonctionnement peut également être régi par une durée d'appui détectée. En effet, s'il est considéré qu'une pression reste aux mêmes coordonnées sur la surface pendant un laps de temps supérieur à un laps de temps prédéterminé, il peut être décidé que l'action de l'utilisateur est un appui ponctuel. Cependant ce mode est en plus de la mesure de pression qui est le facteur principal de choix du mode de fonctionnement.

En plus, il est possible d'avoir une troisième caractéristique qui distingue un appui ponctuel d'un glissement, cette caractéristique étant une immobilité du doigt entre le moment du contact du doigt (ou autre objet) sur la surface et le moment du détachement. Cela se traduit en ce que la distance parcourue par le point de contact doit être inférieure à une longueur L prédéfinie. Si la distance parcourue par le point de contact est supérieure à L, le geste n'est pas considéré comme un appui. Il est soit ignoré, soit considéré comme un glissement s'il remplit les conditions propres du glissement.

Dans le cas d'un appui, au moins une portion de surface 2 de la surface tactile 1 est désactivée de sorte à délimiter au moins deux portions de surface actives 41-44 de la surface tactile séparée par la zone désactivée 2. La figure 1 montre un tel cas avec une zone désactivée en forme de X centrée sur la surface tactile 1 séparant quatre surfaces actives 41-44 de la surface, une en bas 44, une en haut 42, une à droite 41 et une à gauche 43. Dans ce cas précis, les zones désactivées comprennent les diagonales, le centre et les quatre coins.

Dans la figure 1 on voit clairement un point d'appui 3 sur la zone de droite 41 dont la commande est donc sélectionnée (zone hachurée).

Les zones à gauche et à droite 41, 43 peuvent par exemple respectivement correspondre à une sélection de plage arrière et avant d'une bande sonore, ou à une action de raccrochage/décrochage d'un téléphone portable en mode haut parleur. D'un autre côté, les zones en haut et en bas 42, 44 peuvent par exemple respectivement correspondre à une sélection de volume supérieur/inférieur d'une bande sonore ou d'un téléphone portable en mode haut parleur.

Si le premier mode de fonctionnement choisit de mettre en œuvre une commande liée à des coordonnées d'un point ponctuel 3 sur la surface tactile 1, le second mode fonctionne différemment puisque si la commande désactive également au moins une portion de surface 2 de la surface tactile de sorte à délimiter au moins deux portions 41-44, ici quatre, de surface actives de la surface tactile 1 séparées par la zone désactivée 2, elle diffère, comme montré dans la figure 2 en ce que la zone désactivée 2 en forme de X n'est plus centrée sur la surface tactile 1 mais sur les coordonnées du point d'appui initial 3 de sorte à créer quatre zones désactivées 2 séparant quatre surfaces actives 41-44 de la surface, une en bas 44, une en haut 42, une à droite 41 et une à gauche 43. Ces surfaces actives ont une forme essentiellement triangulaire et permettent, en surveillant l'évolution des coordonnées du point d'appui 3 sur la surface tactile, de définir un vecteur dans l'une des surfaces actives et ainsi une direction de glissement. Il est à noter qu'un glissement et un appui, même s'ils ont la même signification « spatiale » c'est-à-dire un appui sur la zone de droite et un glissement vers la droite, peuvent être liés à des commandes différentes, par exemple si un glissement à droite commande une plage suivante d'un liste de lecture, un appui (plus ou moins long) à droite peut commander une avance rapide de la même plage et ainsi de suite.

La figure 2 montre deux exemples de glissement, les glissements a et b. Le glissement a lieu dans la zone de droite 41, il sera donc reconnu. Au lieu de ca, le glissement b, suite, par exemple à un mauvais geste de l'utilisateur à lieu dan la zone inactive et ne sera donc pas pris en compte. Il est également tout a fait possible d'établir un seuil de pourcentage de zone de glissement active, par exemple il faut que le glissement ai lieu à 100 % dans la zone active pour qu'il soit pris en compte.

De manière générale, comme sécurité, pour éviter une action par maladresse, l'une ou l'autre des première et seconde commandes n'est lancée que si le capteur de pression détecte une pression pendant un temps prédéterminé ou supérieur à ce temps prédéterminé, par exemple 30 millisecondes.

Egalement, en plus de la pression détectée, le second mode de fonctionnement peut être commandé, si la distance de glissement détectée est supérieure à un certain seuil et ignoré si elle est inférieure à ce seuil, par exemple 15 millimètres. Cela est par exemple représenté par la limite 5 sur la figure 2 qui a la forme d'un cercle centré sur le point d'appui 3. Il faut que la distance de glissement dépasse ce cercle. Par exemple, le glissement c ici ne sera pas pris en compte.

L'invention concerne également un volant de véhicule comprenant une surface tactile tel que décrit plus haut de même qu'un véhicule automobile comprenant un tel volant de véhicule.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Surface tactile (1) destinée à être montée sur un volant de véhicule, comprenant un capteur de pression, le capteur de pression étant agencé pour détecter une pression d'un organe d'un utilisateur en appui sur ladite surface tactile, **caractérisée en ce qu'**en fonction de la pression détectée, la surface tactile est agencée pour fonctionner selon un premier mode dans lequel elle est agencée pour lancer une première commande suite à un appui ponctuel (3), ou un second mode dans lequel elle est agencée pour lancer une seconde commande suite à un glissement, dans laquelle la seconde commande est agencée pour désactiver une zone (2) en forme de X centrée sur les coordonnées du point d'appui initial (3).

2. Surface tactile selon la revendication précédente, dans laquelle les première et seconde commandes sont agencées pour désactiver au moins une portion de surface (2) de la surface tactile (1) de sorte à délimiter au moins deux portions de surface actives (41-44) de la surface tactile (1).

3. Surface tactile selon la revendication 1 ou 2, dans laquelle les première et seconde commandes sont agencées pour désactiver une zone (2) en forme de X séparant quatre surfaces actives sur la surface tactile (41-44).

4. Surface tactile selon la revendication précédente, dans laquelle la première commande est agencée pour désactiver une zone (2) en forme de X centrée sur la surface tactile (1).

5. Surface tactile selon l'une des revendications précédentes, dans laquelle l'une ou l'autre des première et seconde commandes n'est lancée que si le capteur de pression détecte une pression pendant un temps prédéterminé ou supérieur.

6. Surface tactile selon la revendication précédente, dans laquelle le temps prédéterminé est de 30 millisecondes.

7. Surface tactile selon l'une des revendications précédentes, dans laquelle le second mode est mis en œuvre si le glissement détecté est supérieur à 15 millimètres.

8. Volant de véhicule comprenant une surface tactile (1) selon l'une des revendications précédentes.

9. Véhicule automobile comprenant un volant de véhicule selon la revendication précédente.

## Patentansprüche

1. Berührungsempfindliche Oberfläche (1), die dazu bestimmt ist, auf ein Fahrzeuglenkrad montiert zu sein, die einen Drucksensor umfasst, wobei der Drucksensor eingerichtet ist, um einen Druck eines Organs eines Benutzers in Auflage auf der berührungsempfindlichen Oberfläche zu erfassen, **dadurch gekennzeichnet, dass** in Abhängigkeit von dem erfassten Druck die berührungsempfindliche Oberfläche eingerichtet ist, um gemäß einem ersten Modus zu funktionieren, in dem sie eingerichtet ist, um einen ersten Befehl im Anschluss an ein punktuelles Aufliegen (3) zu starten, oder gemäß einem zweiten Modus, in dem sie eingerichtet ist, um einen zweiten Befehl im Anschluss an ein Gleiten zu starten, wobei der zweite Befehl eingerichtet ist, um eine Zone (2) in Form eines X, die auf den Koordinaten des ursprünglichen Auflagepunkts (3) zentriert ist, zu deaktivieren.

2. Berührungsempfindliche Oberfläche nach dem vorstehenden Anspruch, wobei der erste und der zweite Befehl eingerichtet sind, um mindestens einen Oberflächenabschnitt (2) der berührungsempfindlichen Oberfläche (1) derart zu deaktivieren, dass mindestens zwei aktive Oberflächenabschnitte (41 - 44) der berührungsempfindlichen Oberfläche (1) abgegrenzt werden.

3. Berührungsempfindliche Oberfläche nach Anspruch 1 oder 2, wobei der erste und der zweite Befehl eingerichtet sind, um eine Zone (2) in Form eines X zu deaktivieren, die vier aktive Oberflächen auf der berührungsempfindlichen Oberfläche (41 - 44) trennt.

4. Berührungsempfindliche Oberfläche nach dem vorstehenden Anspruch, wobei der erste Befehl eingerichtet ist, um eine Zone (2) in Form eines X, die auf der berührungsempfindlichen Oberfläche (1) zentriert ist, zu deaktivieren.

5. Berührungsempfindliche Oberfläche nach einem der vorstehenden Ansprüche, wobei der eine oder der andere des ersten und zweiten Befehls nicht gestartet wird, falls der Drucksensor einen Druck während einer vorbestimmten Zeit oder länger erfasst.

6. Berührungsempfindliche Oberfläche nach dem vorstehenden Anspruch, wobei die vorbestimmte Zeit 30 Millisekunden beträgt.

7. Berührungsempfindliche Oberfläche nach einem der vorstehenden Ansprüche, wobei der zweite Modus umgesetzt wird, falls das erfasste Gleiten größer ist als 15 Millimeter.

8. Fahrzeuglenkrad, das eine berührungsempfindliche Oberfläche (1) nach einem der vorstehenden Ansprüche umfasst.

9. Kraftfahrzeug, das ein Fahrzeuglenkrad nach dem vorstehenden Anspruch umfasst.

## Claims

1. A touch-sensitive surface (1) intended to be mounted on a vehicle steering wheel, including a pressure sensor, the pressure sensor being arranged to detect a pressure from a member of a user pressing on said touch-sensitive surface, **characterized in that** as a function of the detected pressure, the touch-sensitive surface is arranged to function according to a first mode in which it is arranged to initiate a first command following a point pressure (3), or a second mode in which it is arranged to initiate a second command following a sliding, in which the second command is arranged to deactivate an X-shaped zone (2) centred on the coordinates of the initial pressure point (3).

2. The touch-sensitive surface according to the preceding claim, in which the fist and second commands are arranged to deactivate at least a surface portion (2) of the touch-sensitive surface (1) so as to delimit at least two active surface portions (41 - 44) of the touch-sensitive surface (1).

3. The touch-sensitive surface according to Claim 1 or 2, in which the first and second commands are arranged to deactivate an X-shaped zone (2) separating four active surfaces on the touch-sensitive surface (41 - 44).

4. The touch-sensitive surface according to the preceding claim, in which the first command is arranged to deactivate an X-shaped zone (2) centred on the touch-sensitive surface (1).

5. The touch-sensitive surface according to one of the preceding claims, in which one or other of the first and second commands is only initiated if the pressure sensor detects a pressure during a predetermined or greater time.

6. The touch-sensitive surface according to the preceding claim, in which the predetermined time is 30 milliseconds.

7. The touch-sensitive surface according to one of the preceding claims, in which the second mode is implemented if the detected sliding is greater than 15 millimetres.

8. A vehicle steering wheel including a touch-sensitive surface (1) according to one of the preceding claims.

9. A motor vehicle including a vehicle steering wheel according to the preceding claim.
